(19)

Europäisches Patentamt
European Patent Office
Office européen des brevets

(11) **EP 2 731 843 B1**

(12) **EUROPEAN PATENT SPECIFICATION**

(45) Date of publication and mention
of the grant of the patent:
**19.12.2018 Bulletin 2018/51**

(21) Application number: **12811566.4**

(22) Date of filing: **06.07.2012**

(51) Int Cl.:
*B60W 40/09* (2012.01)    *B60R 16/023* (2006.01)
*B60W 50/14* (2012.01)    *G07C 5/08* (2006.01)
*B60W 40/107* (2012.01)    *B60W 40/10* (2012.01)

(86) International application number:
**PCT/SE2012/050799**

(87) International publication number:
**WO 2013/009249 (17.01.2013 Gazette 2013/03)**

(54) **METHOD AND DEVICE FOR DETERMINATION OF ENERGY CONSUMPTION OF VEHICLES**

VERFAHREN UND VORRICHTUNG ZUR BESTIMMUNG DES ENERGIEVERBRAUCHS VON FAHRZEUGEN

PROCÉDÉ ET DISPOSITIF DE DÉTERMINATION DE CONSOMMATION D'ÉNERGIE DE VÉHICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2011 SE 1150679**

(43) Date of publication of application:
**21.05.2014 Bulletin 2014/21**

(73) Proprietor: **Scania CV AB**
**151 87 Södertälje (SE)**

(72) Inventors:
• **JENSEN, Anders**
**S-646 32 Gnesta (SE)**
• **WANSÖLIN, Peter**
**S-153 36 Järna (SE)**

(74) Representative: **Scania CV AB**
**Patents, GP 117kv**
**151 87 Södertälje (SE)**

(56) References cited:
**EP-A1- 1 780 393      EP-A1- 2 295 935**
**DE-A1- 10 138 750     DE-A1- 19 958 393**
**JP-A- 2010 151 021    JP-A- 2011 016 465**
**US-A- 6 092 021       US-A1- 2005 021 222**
**US-A1- 2005 288 850   US-A1- 2006 089 785**
**US-A1- 2007 088 493**

• **SAXE, M. ET AL.: 'ENERGY SYSTEM ANALYSIS OF THE FUEL CELL BUSES OPERATED IN T he project: Clean Urban Transport for Europe.' ENERGY vol. 33, no. 5, 2008, pages 689 - 711, XP022533948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to methods and systems for determination of energy consumption of vehicles, and in particular to a method for determining an energy consumption of a vehicle according to the preamble of claim 1. The present invention relates also to a vehicle, and also a computer programme and a computer programme product, which implement the method according to the invention.

### Background to the invention

In the running of heavy vehicles, e.g. trucks, buses and the like, economy has over time become increasingly important in the profitability of the activity in which the vehicle is used. As well as the vehicle's procurement cost, the main items of expenditure involved in routine operation comprise driver pay, repair and maintenance costs and fuel to power the vehicle. It is therefore important to keep the costs in each of these areas as low as possible.

Fuel costs and repair and maintenance costs often run in parallel in that a vehicle which is driven hard not only consumes more fuel but is also subject to greater wear, resulting in higher repair and maintenance costs.

However, an existing problem for companies using heavy vehicles in their activities is that it may be difficult to identify how large a proportion of fuel consumption and wear is due to imprudent driving and how large a proportion is due to other factors, e.g. very hilly terrain, heavily laden vehicles and/or urban environments with dense traffic.

For this reason, systems have been developed to make it easier, e.g. for drivers and owners, to assess whether vehicles are actually driven in a fuel-economising way.

These systems make it possible for vehicles in a fleet to be connected to, for example, a transport management system of the fleet owner, e.g. via wireless links such as suitable telecommunication systems, to make it possible to monitor the fleet in real time, e.g. with respect to vehicle utilisation and fuel efficiency.

US2005/002122A1 discloses a method for determining an energy consumption of a vehicle provided with a first power source in the form of an engine for generating a first driving force for propulsion of the vehicle, where the method comprises estimating, when the vehicle is travelling in a first direction, the energy consumed as a result of a first braking force and a second braking which counteract the movement of said vehicle in the direction.

EP2295935A1 shows a method of predicting energy consumption of a vehicle using geographic characteristic values which are independent from particular driving patterns and vehicle parameters.

DE19958393A1 shows a method for determining the driver type based on a time-averaged fuel consumption of a vehicle.

### Summary of the invention

An object of the present invention is to propose a method for determining an energy consumption of a vehicle. This object is achieved with a method according to claim 1.

The present invention relates to a method for determining an energy consumption of a vehicle which is provided with a first power source in the form of an engine for generating a first driving force for said vehicle's propulsion. The method comprises:

- estimating, when said vehicle is travelling in a first direction, the energy consumed as a result of a first braking force which counteracts its movement in said direction;
- accumulating, when said vehicle is in motion, a representation of the energy consumed as a result of said first braking force;
- estimating the energy consumed as a result of at least one other braking force which counteracts the movement of the vehicle (100) in said direction;
- accumulating, during said travelling of said vehicle (100), a representation of the energy consumed as a result of said at least one other braking force, and
- determining a breakdown of energy consumed between said braking forces, and making an assessment of the driving of said vehicle on the basis of said breakdown.

This estimation preferably commences as soon as the engine is started and/or as soon as the vehicle is in motion, in order thereafter to continue for as long as the engine is running and/or a journey proceeds. The invention affords the advantage that a value for the amount of energy actually consumed by said braking force can be determined for the journey. This value can then be used in evaluating the way the vehicle is driven. It is of course desirable for energy consumption to be as low as possible, i.e. for energy conversion to be as low as possible, since the larger the amount of energy converted the more the fuel required to propel the vehicle by means of the engine.

The accumulation of estimated amounts of energy may for example take place throughout the journey or for as long as the vehicle is driven by a first driver.

The estimated amount of energy may be presented for the vehicle's driver, e.g. via a display, and comprehension may for example be facilitated by the accumulated amount of energy being converted to amount of fuel and/or cost of fuel to further highlight the cost which is due to said first braking force. Said first braking force may be any of various different forces which counteract the vehicle's movement, e.g. air resistance force, rolling resistance force, engine friction force, gearbox friction force, use of power by ancillaries, force applied by brake systems.

According to the invention, a representation of converted energy is accumulated for several braking forces, e.g. two or more of the above, potentially for each of the braking forces individually, making it possible for data as above to be presented for each of them. By subsequently analysing the breakdown of energy consumption between the various braking forces it is possible to make an assessment of the way the vehicle is driven. The estimated amount of energy may also be transmitted to a distant location, e.g. a fleet management centre, enabling central evaluation of a plurality of vehicles, and also of drivers in cases where the same driver uses two or more vehicles.

High energy consumption due to air resistance force may for example indicate the vehicle being driven unnecessarily fast. The presentation of converted energy may be combined with giving the driver hints for improvement, e.g. by reducing speed in order to decrease the air resistance effect.

The vehicle may also be provided with an energy converter in the form of an internal brake system, e.g. a service brake system or a supplementary brake system, said first braking force being applied by means of said first brake system. In this case the method may comprise estimating for a succession of activations of said first brake system an amount of energy converted by said first brake system when it is activated. As described above, estimation of energy consumption preferably commences as soon as the engine is started and/or as soon as the vehicle is in motion, but in this case it preferably commences instead as soon as the brake system is activated, and then continues for as long as the brake system is activated, making it possible to obtain a good estimate of the energy consumption due to this braking.

This affords the advantage of providing a value for the aggregate amount of energy actually braked away by the driver during a succession of activations of the brake system. This value can then be used as a measure of how the vehicle is driven by the driver. It is of course desirable for the amount of energy to be as low as possible, since more energy braked away arises from less display of foresight by the driver when driving the vehicle.

Presenting this information, e.g. in the form of amount of energy or converted to amount of fuel and/or cost of fuel to further highlight the cost of driving the vehicle in a way which involves much braking, makes it possible for the driver to appreciate how large a cost is actually braked away. With a view to reducing the proportion of energy braked away via the brake system, the driver may be given hints, e.g. the system may suggest maintaining greater spacing from vehicles in front. The estimated amount of energy braked away via brake systems serves also as a good measure of how the vehicle is driven, which means that this amount of energy can with advantage be used to evaluate and compare drivers.

Although previous known systems have afforded advantages in the evaluation of vehicles/drivers, it has remained difficult to determine accurately how large a proportion of fuel consumption is due to mode of driving rather than such factors as the environment in which the vehicle is travelling or how heavily it is laden. The system according to the present invention therefore solves this.

The vehicle may further be provided with more than one internal brake system, in which case a representation of converted energy can be accumulated for each of the brake systems individually, making it possible for data as above to be presented for each of them separately or in aggregate as a single energy consumption.

Further characteristics of the present invention and advantages thereof are indicated by the detailed description of embodiment examples set out below and the attached drawings.

## Brief description of drawings

Fig. 1a    depicts a power train in a vehicle in which the present invention may be employed.

Fig. 1b    depicts a control unit in a vehicle control system.

Fig. 2    illustrates an example of a method according to the present invention.

Fig. 3    is an example of an energy consumption chart for a vehicle.

## Detailed description of embodiments

In the present description and claims, braking force means a force which counteracts the vehicle's movement in the direction of travel. This braking force may be applied by a brake system internal to the vehicle, e.g. a service brake system or supplementary brake system, or by friction force in the vehicle's internal components. It may also take the form of an external braking force, e.g. air resistance force or rolling resistance force.

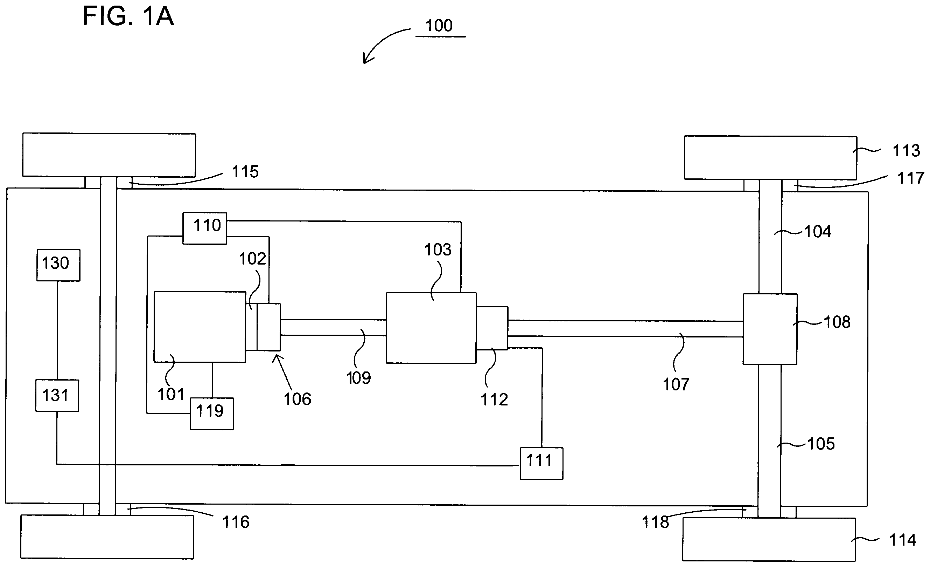

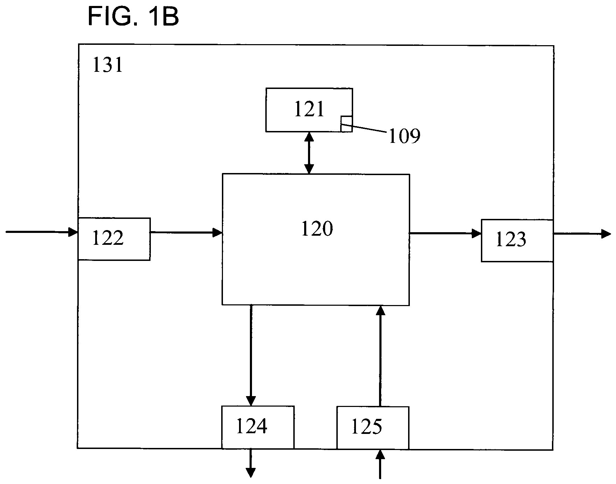

Fig. 1a depicts schematically a power train in a heavy vehicle 100 according to an embodiment of the present invention. The vehicle schematically depicted in Fig. 1 has only one shaft provided with powered wheels 113, 114 but the invention is also applicable on vehicles which have more than one shaft with powered wheels. The power train comprises a combustion engine 101 which in a conventional way is connected, via an output shaft of the engine, usually via a flywheel 102, to an input shaft 109 of a gearbox 103 via a clutch 106. The clutch may for example be an automatically operated clutch controlled by the vehicle's control system via a control unit 110 which controls also the gearbox 103. The vehicle further comprises driveshafts 104, 105 which are connected to the powered wheels 113, 114 and are driven by an output shaft 107 from the gearbox 103 via an axle gear 108, e.g. a conventional differential.

The vehicle 100 may further be provided with a service brake system which may for example conventionally comprise brake discs 115-118 with associated brake linings (not depicted) adjacent to each wheel. The pressure at which the brake linings are applied to the brake discs to generate braking force is controlled by the vehicle's control system, e.g. by means of a brake control unit 111 which in a conventional way sends signals to the one or more regulators which regulate braking force in the service brake system.

The brake control unit 111 may for example be adapted to controlling only the service brake system but may also be adapted to controlling various of the vehicle's other brake systems, if any. The vehicle may for example be provided with a retarder as below and/or other supplementary brake systems, e.g. exhaust brake and engine brake. On the basis for example of the driver's commands, control signals are sent to appropriate system modules to demand desired braking force.

The vehicle 100 may also comprise a hydraulic auxiliary/supplementary brake in the form of a retarder 112 which is situated on the gearbox output shaft 107, is controlled by, for example, the brake control unit 111 or some other control unit and exerts braking force by using, for example, a turbine to counteract the rotation of the gearbox output shaft 107. The retarder 112 may be adapted to cooperating with the service brake system, e.g. via the brake control unit 111, and may for example be used in conventional ways to relieve the service brake system with a view to reducing wear and the risk of overheating of brake discs/linings.

The vehicle 100 comprises also a driving cab provided conventionally with a driver environment with instruments, operating controls etc. This driver environment may also comprise at least one display 130 to present information for the driver. According to an embodiment of the present invention, the display 130 is used to present energy consumption for the driver as below. The display may for example be controlled by a control unit 131 which may also be used to implement at least parts of the present invention.

Control systems in modern vehicles generally comprise a communication bus system consisting of one or more communication buses to connect together a number of electronic control units (ECUs) and various components on board the vehicle. Such a control system may comprise a large number of control units and the responsibility for a specific function may be divided between two or more of them. One control unit may also be adapted to being responsible for more than one function.

As above, for the sake of simplicity, Fig. 1a depicts only the control units 110, 111, 131 and the control unit 119 which controls the engine 101, but vehicles of the type here concerned often have significantly more control units, as one skilled in the art will appreciate.

In the embodiment depicted, the present invention is implemented in the control unit 131, which may as above control what is presented on said display 130 but may also be a control unit dedicated to the present invention. The invention may also be implemented in whole or in part in one or more control units already present on board the vehicle, e.g. the brake control unit 111, another of the control units mentioned above or another suitable control unit.

The control exercised by the control unit 131 is likely to depend not only on the brake control unit 111 but also, for example, on information received from, for example, the one or more control units which control engine functions, i.e. in the present example the control unit 119, and probably also other control units on board, with a view to calculation of energy consumption as below.

Control units of the type here concerned are normally adapted to receiving sensor signals from various parts of the vehicle, e.g. the brake control unit 111 may receive sensor signals representing various prevailing conditions in the vehicle's brake system and signals from, for example, the retarder 112 and the engine control unit 119. Control units of the type here concerned are also usually adapted to delivering control signals to various vehicle parts and components. In the present example, the brake control unit 111 delivers signals to various control devices to demand braking force, and also delivers signals to the control unit 131 which itself delivers signals to the display 130 for presentation of energy consumption as below.

Control is often governed by programmed instructions, typically in the form of a computer programme which, when executed in a computer or control unit, causes the computer/control unit to effect desired forms of control action, e.g. method steps according to the present invention. The computer programme usually takes the form of a computer programme product 129 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in or connected to the control unit, and which is executed by the control unit. The vehicle's behaviour in a specific situation is therefore modifiable by altering the computer programme's instructions.

An example of a control unit (the control unit 131) is depicted schematically in Fig. 1b, possibly comprising a calculation unit 120 which may for example take the form of some suitable type of processor or microcomputer, e.g. a circuit for digital signal processing (Digital Signal Processor, DSP), or a circuit with a predetermined specific function (Application Specific Integrated Circuit, ASIC). The calculation unit is connected to a memory unit 121 which contains, for example, the stored programme code 129 and/or the stored data which the calculation unit needs for it to be able to perform calculations. The calculation unit is also arranged to store partial or final results of calculations in the memory unit 121.

The control unit is further provided with respective devices 122, 123, 124, 125 for receiving and sending input and output signals. These input and output signals may comprise waveforms, pulses or other attributes which the input signal receiving devices 122, 125 can detect as information and can convert to signals which the calculation unit 120 can process. These signals are therefore conveyed to the calculation unit. The output signal sending devices 123, 124 are arranged to convert signals received from the calculation unit in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, an MOST (Media Orientated Systems Transport) bus or some other bus configuration, or a wireless connection.

As above, there are various different existing systems for evaluating from an economic point of view the way vehicles are driven. Those systems afford advantages in the evaluation of vehicles/drivers. However, a heavily laden vehicle consumes substantially more fuel than a lightly laden one, and it may remain difficult to determine what proportion of fuel consumption is actually due to mode of driving rather than, for example, to how heavily the vehicle is laden.

The present invention proposes a method which makes accurate evaluation of a journey possible irrespective of how laden the vehicle is.

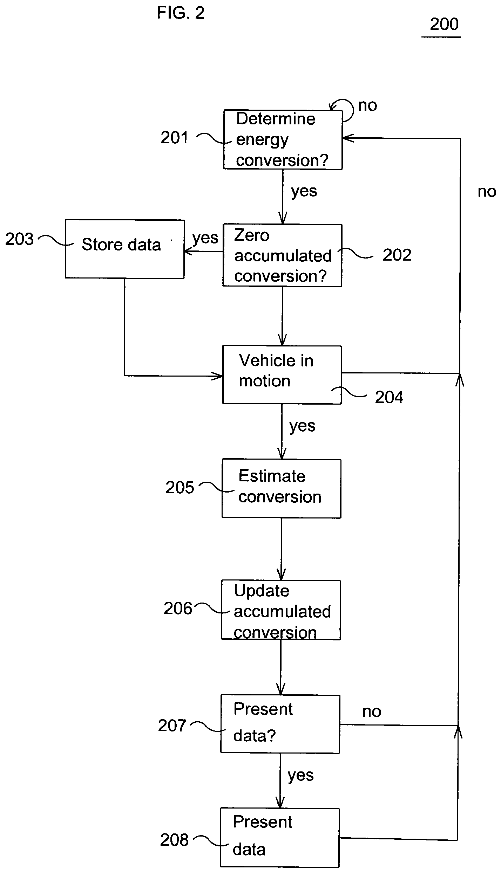

A method 200 according to the present invention is illustrated in Fig. 2. The method according to the invention begins at step 201 by determining whether determination of energy consumption should take place, in which case the method moves on to step 202 to determine whether accumulated energy consumption should be zeroed.

As previously mentioned, energy consumption may be accumulated for a whole journey but accumulated energy consumption may also be estimated for periods other than a complete journey. Accumulated energy consumption may for example be zeroed at any of the following times:

- at vehicle start-up, i.e. each time the engine is started;

- the first time the engine is started on a new day. This alternative is mainly applicable to vehicles which are usually stationary overnight. Vehicles engaged in long-distance haulage often travel at night as well, so some other suitable zeroing time may be more appropriate;

- when starting a journey, i.e. when starting a haulage run from a point A to a point B. The start of the journey may for example be indicated by the driver by appropriate input, e.g. via an input unit such as a pressure-sensitive display. During the journey/haulage run from A to B, the engine may be switched off, e.g. during breaks, carriage by sea, rests etc., without any zeroing;

- each time the vehicle is reloaded, which is often indicated to the control system by the driver, e.g. via a pressure-sensitive display;

- each time another driver takes over the vehicle.

It will be appreciated that accumulated energy consumption may also be zeroed at quite other times than those exemplified above, or not at all. Energy consumption may also be accumulated in various different counters which are zeroed at different times, e.g. so that there is simultaneous availability of converted energy since the latest start-up of the engine, on a new day, since driver change, since the first time the vehicle was put into use, etc.

There may also be different counters for the various braking forces for which energy consumption is estimated, as explained below.

If zeroing is to take place, the method moves on to step 203 for storage of data on accumulated energy consumption. These data may thus be stored at the time of zeroing for any of the above reasons, so that accumulated energy consumption can for example be used for evaluation as below. After storage of accumulated energy consumption at step 203, or if data on accumulated energy consumption are not to be stored, the method moves on to step 204 to determine whether the vehicle is stationary. If it is, no kinetic or potential energy is being converted/consumed and the method goes back to step 201 to again determine whether determination of energy consumption should take place. If however the vehicle is in motion at step 204, the method moves on to step 205 to estimate the amount of energy converted by one or more braking forces which counteract the vehicle's movement in the direction of travel. This may be achieved in various different ways, as exemplified below. The method illustrated in Fig. 2 may be applied to each braking force individually or simultaneously to all of those for which determination is to take place. One embodiment determines only energy consumption via the braking force from the vehicle's service brake system. Another embodiment determines only energy consumption for braking force generated by an internal brake system of the vehicle, e.g. service brake, supplementary brake etc.

In the case of braking forces from the vehicle's internal brake system, energy consumption occurs when the brake system is active, and determining whether the brake system is active takes place before the kinetic and/or potential energy decrease undergone by the vehicle as a result of brake system activation is estimated.

One embodiment determines the energy converted at each activation of relevant brake systems, i.e. irrespective of whether the braking action results in a change in the vehicle's speed or not. One embodiment determines only the amount of energy consumed in reducing the vehicle's speed, i.e. amounts of converted energy are only determined for braking operations which actually reduce the vehicle's speed. When for example determining an amount of converted energy for a constant speed brake system, one embodiment determines the amount of energy converted by the constant speed brake system for ensuring that the vehicle does not reach too high a speed, e.g. on downhill runs.

In the present example, the invention is implemented in the control unit 131, which has means for receiving signals related to brake systems and other signals related to the vehicle. As previously mentioned, the vehicle may for example be provided with retarder, exhaust brake, service brake and engine brake, in which case the control unit 131 has means for receiving signals pertaining to these brake systems, e.g. either from the brake system control unit 111 or directly from each brake system individually or from some other suitable control unit. The respective brake systems and/or brake control units may for example send signals to the control unit 131 for as long as each brake system is active.

A large amount of information is also available to control systems in vehicles of the type here concerned via the various control units. These available data can be used by the control unit 131 to estimate the energy consumption which in addition to the vehicle's one or more internal brake systems is due to other braking forces which act upon the vehicle. Estimating the various braking forces may be based on well-known physical laws in order in a qualified way to gain information about converted energy. Ways of estimating amounts of converted energy for different braking forces are exemplified below.

An approximate estimate of the influence of the service brake, which may be applicable in cases where energy consumption is accumulated for braking operations which result in a speed decrease, may be arrived at by determining the decrease in kinetic energy, i.e.

$$E_k = \frac{1}{2}mv_1^2 - \frac{1}{2}mv_2^2 \text{ , in which } v_1 \text{ is the vehi-}$$

cle's speed at the beginning of brake activation and $v_2$ its speed when the brake activation ends. This approach does however not cater for the speed change which the vehicle would in any case have undergone, e.g. because of sloping running surface.

In one embodiment, the control unit 131 therefore receives signals which represent braking torque applied by each brake system, or signals from which braking torque can be determined. Possible examples comprise braking torque from service brakes (e.g. disc or drum brakes), braking torque from retarder brakes, braking torque from exhaust brakes and braking torque from one or more other supplementary brakes, e.g. engine braking torque.

On the basis of said braking torques it is then possible to determine for each brake system an energy measurement which represents the amount of energy converted during a braking operation, i.e. the amount of energy by which the vehicle's kinetic and/or potential energy decreases over the period when the brake system is activated. The energy measurement may also be determined for the braking operation as a whole, e.g. in cases where determination covers all of the brake systems involved in the braking operation.

This measurement thus specifically indicates amounts of energy braked away during a braking operation or by a specific brake system. If for example the service brake is used for a short period but with hard loading (high torque), the result will still be an accurate value for the influence/use of the service brake.

As previously mentioned, a large amount of information is available via the various control units, e.g. current torque delivered by the engine 101 is available via the engine control unit 119 to other control units via the vehicle's control system. The torque may be positive when fuel is being consumed or negative during engine braking. The torque applied by means of the exhaust brake may also be reported, e.g. continuously and via for example suitable control units, e.g. the brake control unit 111 or a control module dedicated to the exhaust brake, or in some other suitable way. When the driver or the brake control unit demands exhaust braking, current braking torque is thus available to other control units via the control system. Similarly, the retarder's current braking torque is available via the vehicle's control system. Disc brake systems and drum brake systems may either report brake pressures (from which braking torque can be calculated on the basis of physical relationships known to one skilled in the art) or the braking torque directly via the control system. The result is an easy way of providing desired information to the control unit 131.

As is well-known, energy $E$ may be expressed as $E = Fs$, in which $F$ represents force and s represents distance travelled, which is the same as time integration of force and speed. The Power output $P = F$ (force acting upon the vehicle) * $v$ (vehicle speed), and the Energy = Power output * time. As information about the vehicle's speed is also available via its control system, all that remains is to convert braking torque received to actual braking forces which act upon the vehicle's wheels.

Engine braking torque and exhaust braking torque are multiplied first by current gear ratio in the gearbox (information likewise normally available via the control system) and then by the ratio of the final gear before being divided by the radius of the powered wheels. These factors are normally already known from the vehicle specification but may also be available via the control system. If the driver has engaged neutral gear, if the vehicle changes gear or if the clutch is depressed, it is possible to determine immediately that these two braking torques have to be zero, since engine and exhaust brakes (the exhaust brake being situated upstream of the gearbox) are then disconnected from the powered wheels.

The braking force generated by the retarder depends on its location. As illustrated in Fig. 1a, the retarder is usually situated after the gearbox, so the torque generated by the retarder is multiplied by the ratio of the final gear and divided by the radius of the powered wheels.

Braking forces for disc and drum brakes may be determined in various different ways. The torque of disc and drum brakes need only be divided by the radius of the powered wheels to arrive at a measurement of braking force. If there is no information about these braking torques, a model may be used to move from brake pressure to braking torque. For example, information about types of brakes, number of braked shafts etc. may be used in the model. All such information is usually known from vehicle specifications and/or is available via the control system.

The braking force for disc and drum brakes may also be determined as $F = \dfrac{\omega M}{v}$, in which $M$ is the braking torque, $v$ the vehicle's speed and $\omega$ the angular velocity.

It should be noted that the calculation exemplified above is merely an example of how energy braked away may be determined. Control systems in vehicles are being developed continuously and are constantly acquiring better and better assumptions for calculating the energy braked away via the vehicle's brake system, and performing the calculations in the manner most appropriate to the respective vehicle is within the scope of the present invention.

As well as braking forces from the vehicle's internal brake system, energy is converted by braking forces caused mainly by air resistance, rolling resistance and engine friction.

Energy consumption due to air resistance may be determined on the basis of the air resistance force $F = \frac{1}{2}\rho A C d v^2$, in which $\rho$ is the density of the air, $A$ the vehicle's cross-sectional area in the direction of travel, $v$ the vehicle's speed relative to the wind and $Cd$ the air resistance coefficient, which depends on the configuration of the vehicle's surfaces which encounter the wind and is affected by substantially all of the vehicle's external details. The air resistance coefficient may be difficult to calculate but the air resistance force may for example be estimated by subtracting other counteracting forces as below from the power which the engine develops (available via the engine control unit). The air resistance coefficient may also be estimated in this way. Alternatively, $Cd$ may be measured but will change as soon as, for example, a different trailer is coupled. The air resistance may thus be calculated by the vehicle's control system. The air resistance thus depends greatly on the vehicle's speed, and it is generally the case that a large proportion of total energy consumption on long-distance runs at high mean speed will be due to overcoming air resistance.

Another substantial braking force which contributes to energy consumption and can also be estimated according to the present invention is the vehicle's rolling resistance. The rolling resistance force may be expressed as $F = CrN$, in which $Cr$ is the rolling resistance coefficient, which depends mainly on the vehicle's tyres/wheels, the road surface and the normal force $N$ in that the vehicle's prevailing weight is of great significance. The rolling resistance force may likewise be determined by the vehicle's control system.

A further braking force which contributes to energy consumption arises from the engine's internal friction, such that the friction effect may be calculated as $P = M\omega$ and the energy accordingly by integrating this effect over time. The resulting braking force is therefore speed-dependent and consequently increases with increasing speed.

A further factor is the friction of the gearbox, which is likewise speed-dependent, so what is stated above about the calculation of engine friction applies also to gearbox friction. Losses due to the efficiency of the gearbox are a further factor.

Another braking force is friction losses in shafts/hubs, which likewise depend on rotation speed and hence on vehicle speed and final gear ratio, as also the efficiency of the gear.

There are further energy consumers in the form of the various ancillaries powered by the engine, e.g. air conditioning system, fans etc. There may also be other consumers such as supplementary and other ancillaries provided to run, for example, cranes etc. when the vehicle is stationary. Energy consumption may also be determined for idling.

Thus, in addition to energy consumption components which mainly affect the vehicle when it is in motion, energy consumption may also be determined and presented as below for energy consumption components which affect the vehicle when it is stationary.

Energy consumption may thus be estimated at step 205 for a number of braking forces, after which the method 200 moves on to step 206 for updating of accumulated energy consumption for each braking force. After updating at step 206, the method moves on to step 207 to determine whether data on accumulated energy consumption should be presented for the driver before the method goes back to step 201. The method may thus be conducted continuously so that estimation and accumulation can proceed throughout the journey, making fresh estimates each time the method passes step 205 for the braking forces which at the time affect the vehicle. For example, the vehicle will be affected by rolling resistance and air resistance as soon as it moves, whereas its brake systems will only operate when activated. The method 200 may for example be conducted one or more or many times per second in order to continuously determine current energy consumption for each braking force.

By integrating these forces over distance travelled and/or time it is thus possible to determine the total energy converted as a result of the respective counteracting braking forces.

If it is determined that data on energy consumption should be presented for the driver, this is done at step 208 by presenting the accumulated energy consumption. In the present example this takes place via the display 130.

The energy braked away may for example be presented as such and be for example expressed in the form of energy, e.g. number of megajoules MJ or kilowatthours kWh consumed via respective braking forces. Alternatively, e.g. to increase comprehensibility for the driver, energy braked away may instead be expressed in the form of fuel braked away, e.g. in litres L or in litres (L)/100 km. A further possible alternative is to present the cost of fuel braked away. It is also possible for example for both amount of fuel braked away and cost of fuel braked away to be presented for the driver.

Energy consumed may be converted to fuel in several different ways, e.g. a litre of diesel fuel may be assumed to produce about 5 kWh of energy to run the engine (this value comprises also the energy required for overcoming its internal losses, which means that the actual amount of energy used to rotate the engine output shaft is smaller).

The total energy content of diesel fuel is about 10-12 kWh/litre (1kWh = 3.6 MJ), the remaining energy being converted to heat.

The energy consumption may thus be assumed to be about 1 litre per amount of energy braked away of 5*3.6 = 18 MJ. Making this determination and then presenting the energy consumption for the driver thus provides him/her with good feedback about the actual amount of energy involved in merely braking the vehicle.

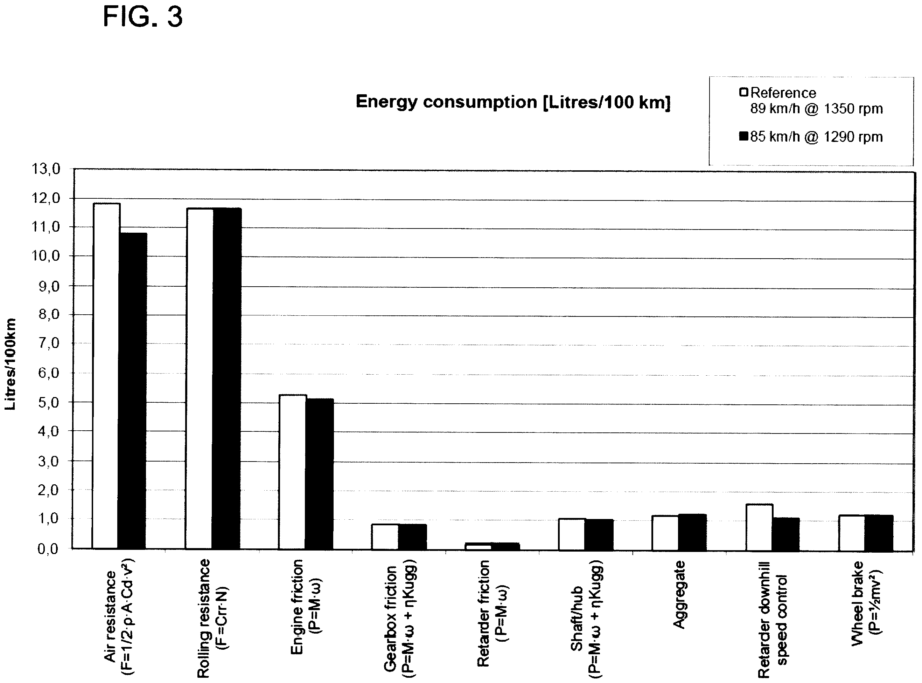

Fig. 3 is an example of what presentation for the driver might look like, in the form of a barchart showing the vehicle's total fuel consumption during a journey, expressed in litres/100 km, divided into a number of energy consumption components. As may be seen, in the present example a large proportion of energy is consumed in overcoming air resistance and rolling resistance. The diagram has bars for two different maximum speeds applied (89 and 85 km/h), to exemplify the influence of speed on fuel consumption for the various energy consumption components. Twin bars may be displayed for the driver, e.g. one of them for actual consumption during the journey and the other an estimated consumption which would have been achieved if the maximum/average speed had been lower. One embodiment does however display for each consumer a single bar which represents actual consumption during the journey.

The bars depicted are very schematic and their mutual size will of course vary greatly depending on vehicle speed, cargo carried, environmental conditions, urban traffic, national highway use etc.

It is thus possible to see how the fuel consumed during a journey breaks down between the various braking forces which counteract the vehicle's movement. One embodiment combines the presentation of energy consumption with a method for presenting the driver with hints on driving the vehicle. In this respect the present invention may with advantage be combined with existing systems to facilitate economical driving.

It is for example possible, if the vehicle's prevailing speed or mean speed is regarded as high, for the driver to be given a hint to slow down somewhat in order to reduce the influence of the air resistance. For example, lowering the vehicle speed from 89 to 87 km/h results in a reduction in air resistance of about 10 MJ/100 km, i.e. about 0.5 litre/100 km.

A speed reduction may also result in a decrease in energy braked away, e.g. via retarder/exhaust brake during cruise control and/or when catching up another vehicle.

If the proportion of energy consumed via the vehicle's internal brake systems is high, the driver may for example be given a hint to maintain better spacing from vehicles in front or to try better to read traffic ahead in order by anticipation to avoid accelerations which would immediately be followed by braking. For example, braking a 40 tonnes vehicle combination from 90 to 70 km/h corresponds to a kinetic energy decrease of about 5 MJ ($\frac{1}{2}mV_2^2$ - $\frac{1}{2}Mv_1^2$) i.e. about 0.3 litre of diesel. It also means that it will take about 0.3 litre of fuel to accelerate the vehicle back up to 90 km/h. If the braking could have been avoided, e.g. by better anticipation or longer spacing from vehicles in front, this amount of fuel could thus have been saved.

Moreover, with a view to reducing engine friction, the driver should run the vehicle at as low engine speed as possible and hence in as high gear as possible. If the vehicle is run in a lower gear than its control system considers appropriate, this may for example be indicated to the driver by a recommendation to change gear upwards. It will be appreciated that the vehicle's speed also has an influence, at least when it is run at different speeds without changing gear.

One embodiment determines only the energy consumption caused by activation of any one of the vehicle's internal brake systems, and another determines only the energy consumption caused by activation of the service brake system. Accumulating a representation of energy braked away during, for example, a journey provides a good measure of how the vehicle is driven. The greater the amount of energy braked away via for example a service brake system, the less foresight the driver probably exercised when driving the vehicle. Energy consumption data may be provided for each of the brake systems individually, i.e. a representation of energy consumed may be accumulated separately for each of the brake systems, or as an accumulation of a composite value. It is also possible to arrive at a breakdown between energy consumed by various of said braking forces, both brake systems and other braking forces, making it possible to assess the driving of the vehicle on the basis of the breakdown of energy consumption between the different braking forces. For example, high energy consumption due to a first braking force may be justified by energy consumption due to a second braking force, and this may be taken into account in the evaluation. For example, high rolling resistance, i.e. a heavily laden vehicle, may reduce the negative influence of other braking forces which at least partly depend on the vehicle's weight.

In addition, or as an alternative, to being displayed for the driver, the energy consumption data described above may also be transmitted, e.g. via suitable telecommunication systems, to a transport management system for the vehicle fleet which the vehicle is part of, e.g. Scania's "Scania Fleet Management". It will be appreciated that the vehicle may be adapted to continuously sending data to the transport management system which can then be used to evaluate both the journey and the driver. If for example a driver drives various vehicles, data may be stored at both vehicle level and driver level in the transport management system so that both driver and vehicles can be compared with one another, e.g. with regard to vehicle utilisation and fuel efficiency. The invention thus makes possible good evaluation of the vehicle's driver and also comparison of, for example, different drivers who drive the same vehicle at different times.

The present invention is not restricted to its embodiments described above but relates to and comprises all embodiments within the protective scope of the attached independent claims. For example, the invention is exemplified above for a vehicle with combustion engine. The invention may also be applied on vehicles with other types of prime mover, since evaluation of energy consumption as above is also relevant to, for example, vehicles with electric motors.

**Claims**

1. A method for determining an energy consumption of a vehicle (100) provided with a first power source in the form of an engine (101) for generating a first driving force for propulsion of said vehicle (100), **characterised in that** the method comprises

   - estimating, when said vehicle (100) is travelling in a first direction, the energy consumed as a result of a first braking force which counteracts the movement of said vehicle (100) in said direction;
   - accumulating, during said travelling of said vehicle (100), a representation of the energy consumed as a result of said first braking force;
   - estimating the energy consumed as a result of at least one other braking force which counteracts the movement of the vehicle (100) in said direction;

   - accumulating, during said travelling of said vehicle (100), a representation of the energy consumed as a result of said at least one other braking force, and
   - determining a breakdown of energy consumed between said braking forces, and making an assessment of the driving of said vehicle on the basis of said breakdown.

2. A method according to claim 1, in which said first braking force comprises at least one from among air resistance force, rolling resistance force, engine friction force, gearbox friction force, use of power by ancillaries, force applied by an internal brake system of the vehicle.

3. A method according to claim 1 or 2, further comprising

   - determining, when estimating the amount of energy consumed by said first braking force, an amount of fuel and/or cost of fuel corresponding to said amount of energy consumed.

4. A method according to any one of claims 1-3, further comprising presenting at least one from among said estimated amount of energy, amount of fuel and cost of fuel for the vehicle's driver via display means (130) situated in said vehicle (100).

5. A method according to any one of claims 1-3, further comprising transmitting said estimated amount of energy and/or amount of fuel and/or cost of fuel to a distant location.

6. A method according to any one of the foregoing claims, further comprising

   - zeroing said at least one accumulated amount of energy when at least one of the following conditions is fulfilled:

      - the engine (101) of the vehicle (100) is started;
      - the engine (101) of the vehicle (100) is started for the first time on a new day;
      - the vehicle starts a journey from a point A to a point B during which the engine (101) is switched off a number of times;
      - said vehicle (100) is reloaded;
      - the vehicle (100) is taken over by another driver.

7. A method according to any one of the foregoing claims, further comprising making an assessment of the driving of said vehicle on the basis of said accumulated representation of the energy consumed by said first braking force.

8. A method according to any one of the foregoing claims, further comprising

   - determining on the basis of said accumulated representation of the energy consumed by said first braking force a first remedial measure to decrease energy consumption by said first braking force, and
   - presenting said first remedial measure for a driver of said vehicle.

9. A method according to any one of the foregoing claims, in which said vehicle (100) comprises at least one energy consumer in the form of a first brake system by means of which said first braking force is applied, which method further comprises

   - estimating for a succession of activations of said first brake system the amount of energy consumed by it when it is activated.

10. A method according to claim 9, in which said first brake system is a service brake system or supplementary brake system.

11. A method according to claim 9 or 10, further comprising estimating, when determining said first amount of energy consumed, a braking torque applied by said first brake system.

12. A method according to any one of claims 9-11, further comprising estimating the amount of energy consumed by said first brake system during its activations which result in a speed decrease for said vehicle (100), and

   - accumulating estimated amounts of energy for the activations of said first brake system which result in a speed decrease for said vehicle (100).

13. A method according to any one of claims 9-12, in which said first brake system takes the form of a constant speed brake system.

14. A method according to any one of claims 9-13, in which said vehicle (100) is provided with at least one other brake system, further comprising

   - estimating for each of said brake systems the amount of energy consumed as a result of its activation, and
   - accumulating said estimated amounts of energy for successive activations of each of said brake systems.

15. A computer program which contains program code and which, when said program code is executed in a computer, causes said computer to apply the method according to any one of claims 1-14.

16. A computer program product comprising a computer-readable medium and a computer program according to claim 15, which program is contained in said computer-readable medium.

17. A system for determining an energy consumption of a vehicle (100) provided with a first power source in the form of an engine (101) for generating a first driving force for propulsion of said vehicle (100), which vehicle (100) comprises at least one first energy consumer in the form of a first brake system, **characterised in that** the system comprises

   - means for estimating, when said vehicle (100) is travelling in a first direction, the energy consumed as a result of a first braking force which counteracts the movement of said vehicle (100) in said direction;
   - means for accumulating, during said travelling of said vehicle (100), a representation of the energy consumed as a result of said first braking force;
   - means for estimating the energy consumed as a result of at least one other braking force which counteracts the movement of the vehicle (100) in said direction;
   - means for accumulating, during said travelling of said vehicle (100), a representation of the energy consumed as a result of said at least one other braking force, and
   - means for determining a breakdown of energy consumed between said braking forces, and making an assessment of the driving of said vehicle on the basis of said breakdown.

18. A vehicle (100) **characterised by** being provided with a system according to claim 17.

**Patentansprüche**

1. Verfahren zum Bestimmen eines Energieverbrauchs eines Fahrzeugs (100), das mit einer ersten Leistungsquelle in Form eines Motors (101) zum Erzeugen einer ersten Antriebskraft zum Antreiben des Fahrzeugs (100) versehen ist, **dadurch gekennzeichnet, dass** das Verfahren umfasst

   - Schätzen, wenn das Fahrzeug (100) in eine erste Richtung fährt, der Energie, die als Folge einer ersten Bremskraft, die der Bewegung des Fahrzeugs (100) in diese Richtung entgegenwirkt, verbraucht wird;
   - Sammeln, während des Fahrens des Fahrzeugs (100), einer Darstellung der Energie, die als Folge der ersten Bremskraft verbraucht wird;

- Schätzen der als Folge der von mindestens einer anderen Bremskraft, die der Bewegung des Fahrzeugs (100) in diese Richtung entgegenwirkt, verbrauchten Energie;
- Sammeln, während des Fahrens des Fahrzeugs (100), einer Darstellung der als Folge der mindestens einen anderen Bremskraft verbrauchten Energie; und
- Bestimmen einer Aufgliederung der zwischen den Bremskräften verbrauchten Energie und Beurteilen des Fahrens des Fahrzeugs auf Basis der Aufgliederung.

2. Verfahren nach Anspruch 1, bei dem die erste Bremskraft mindestens eine von Luftwiderstandskraft, Rollwiderstandskraft, Motorreibungskraft, Getriebereibungskraft, Leistungsnutzung durch Hilfsgeräte, von einem internen Bremssystem des Fahrzeugs angewandte Kraft umfasst.

3. Verfahren nach Anspruch 1 oder 2, ferner umfassend

   - Bestimmen, beim Schätzen der Menge an von der ersten Bremskraft verbrauchten Energie, einer Menge an Kraftstoff und/oder der der Menge an verbrauchter Energie entsprechenden Kraftstoffkosten.

4. Verfahren nach einem der Ansprüche 1-3, ferner umfassend das Darstellen von mindestens einer der geschätzten Menge an Energie, der Menge an Kraftstoff und der Kraftstoffkosten für den Fahrzeugführer über ein Anzeigemittel (130), das sich in dem Fahrzeug (100) befindet.

5. Verfahren nach einem der Ansprüche 1-3, ferner umfassend das Senden der geschätzten Menge an Energie und/oder Menge an Kraftstoff und/oder der Kraftstoffkosten an einen entfernten Ort.

6. Verfahren nach einem der vorhergehenden Ansprüche, ferner umfassend

   - Aufnullbringen der mindestens einen gesammelten Menge an Energie, wenn mindestens eine der folgenden Bedingungen erfüllt ist:

     - der Motor (101) des Fahrzeugs (100) wird gestartet;
     - der Motor (101) des Fahrzeugs (100) wird an einem neuen Tag zum ersten Mal gestartet;
     - das Fahrzeug beginnt eine Fahrt von einem Punkt A zu einem Punkt B, während der der Motor (101) mehrere Male abgeschaltet wird;
     - das Fahrzeug (100) wird aufgetankt;

- das Fahrzeug (100) wird von einem anderen Fahrer übernommen.

7. Verfahren nach einem der vorhergehenden Ansprüche, ferner umfassend das Beurteilen des Fahrens des Fahrzeugs auf der Basis der gesammelten Darstellung der von der ersten Bremskraft verbrauchten Energie.

8. Verfahren nach einem der vorhergehenden Ansprüche, ferner umfassend

   - Bestimmen auf der Basis der gesammelten Darstellung der von der ersten Bremskraft verbrauchten Energie einer ersten Gegenmaßnahme, um den Energieverbrauch durch die erste Bremskraft zu senken, und
   - Darstellen der ersten Gegenmaßnahme für den Fahrer des Fahrzeugs.

9. Verfahren nach einem der vorhergehenden Ansprüche, bei dem das Fahrzeug (100) mindestens einen Energieverbraucher in Form eines ersten Bremssystems umfasst, mithilfe dessen die erste Bremskraft angewendet wird, wobei das Verfahren ferner umfasst

   - Schätzen für eine Reihe von Aktivierungen des ersten Bremssystems die Menge an Energie, die dadurch verbraucht wird, wenn es aktiviert wird.

10. Verfahren nach Anspruch 9, bei dem das erste Bremssystem ein Betriebsbremssystem oder ein Zusatzbremssystem ist.

11. Verfahren nach Anspruch 9 oder 10, ferner umfassend das Schätzen, beim Bestimmen der ersten Menge an verbrauchter Energie, eines Bremsmoments, das von dem ersten Bremssystem angewendet wird.

12. Verfahren nach einem der Ansprüche 9-11, ferner umfassend das Schätzen der Menge an Energie, die von dem ersten Bremssystem während seiner Aktivierungen verbraucht wird, was zu einer Geschwindigkeitsabnahme bei dem Fahrzeug (100) führt, und

   - Sammeln der geschätzten Mengen an Energie für die Aktivierungen des ersten Bremssystems, die zu einer Geschwindigkeitsabnahme bei dem Fahrzeug (100) führen.

13. Verfahren nach einem der Ansprüche 9-12, bei dem das erste Bremssystem die Form eines Konstantgeschwindigkeitsbremssystems annimmt.

14. Verfahren nach einem der Ansprüche 9-13, bei dem das Fahrzeug (100) mit mindestens einem anderen Bremssystem versehen ist, ferner umfassend

- Schätzen für jedes der Bremssysteme die Menge an Energie, die als Folge seiner Aktivierung verbraucht wird, und
- Sammeln der geschätzten Mengen an Energie für sukzessive Aktivierungen eines jeden der Bremssysteme.

15. Computerprogramm, das Programmcode enthält und das, wenn der Programmcode in einem Computer ausgeführt wird, bewirkt, dass der Computer das Verfahren nach einem der Ansprüche 1-14 anwendet.

16. Computerprogrammprodukt, umfassend ein computerlesbares Medium und ein Computerprogramm nach Anspruch 15, wobei das Programm in dem computerlesbaren Medium enthalten ist.

17. System zum Bestimmen eines Energieverbrauchs eines Fahrzeugs (100), das mit einer ersten Leistungsquelle in Form eines Motors (101) zum Erzeugen einer ersten Antriebskraft zum Antreiben des Fahrzeugs (100) versehen ist, wobei das Fahrzeug (100) mindestens einen Energieverbraucher in Form eines ersten Bremssystems umfasst, **dadurch gekennzeichnet, dass** das System umfasst

- Mittel zum Schätzen, wenn das Fahrzeug (100) in eine erste Richtung fährt, der Energie, die als Folge einer ersten Bremskraft, die der Bewegung des Fahrzeugs (100) in dieser Richtung entgegenwirkt, verbraucht wird;
- Mittel zum Sammeln, während des Fahrens des Fahrzeugs (100), einer Darstellung der Energie, die als Folge der ersten Bremskraft verbraucht wird;
- Mittel zum Schätzen der Energie, die als Folge von mindestens einer anderen Bremskraft, die der Bewegung des Fahrzeugs (100) in dieser Richtung entgegenwirkt, verbraucht wird;
- Mittel zum Sammeln, während des Fahrens des Fahrzeugs (100), einer Darstellung der Energie, die als Folge der mindestens einen anderen Bremskraft verbraucht wird, und
- Mittel zum Bestimmen einer Aufgliederung an Energie, die zwischen den Bremskräften verbraucht wird, und Beurteilen des Fahrens des Fahrzeugs auf der Basis der Aufgliederung.

18. Fahrzeug (100), **dadurch gekennzeichnet, dass** es mit einem System nach Anspruch 17 versehen ist.

**Revendications**

1. Procédé permettant de déterminer une consommation d'énergie d'un véhicule (100) muni d'une première alimentation sous la forme d'un moteur (101) destiné à générer une première force d'entraînement pour une propulsion dudit véhicule (100), **caractérisé en ce que** le procédé comprend

- l'estimation, lorsque ledit véhicule (100) se déplace dans une première direction, de l'énergie consommée par suite d'une première force de freinage qui va à l'encontre du mouvement dudit véhicule (100) dans ladite direction ;
- l'accumulation, pendant ledit déplacement dudit véhicule (100), d'une représentation de l'énergie consommée par suite de ladite première force de freinage ;
- l'estimation de l'énergie consommée par suite d'au moins une autre force de freinage qui va à l'encontre du mouvement du véhicule (100) dans ladite direction ;
- l'accumulation, pendant ledit déplacement dudit véhicule (100), d'une représentation de l'énergie consommée par suite de ladite au moins une autre force de freinage, et
- la détermination d'une répartition de l'énergie consommée entre lesdites forces de freinage, et la réalisation d'une évaluation de la conduite dudit véhicule sur la base de ladite répartition.

2. Procédé selon la revendication 1, dans lequel ladite première force de freinage comprend au moins un élément parmi une force de résistance de l'air, une force de résistance au roulement, une force de friction de moteur, une force de friction de boîte de vitesses, l'utilisation d'énergie par des éléments auxiliaires, une force appliquée par un système de frein interne du véhicule.

3. Procédé selon la revendication 1 ou 2, comprenant en outre la

- détermination, lors de l'estimation de la quantité d'énergie consommée par ladite première force de freinage, d'une quantité de carburant et/ou d'un coût de carburant correspondant à ladite quantité d'énergie consommée.

4. Procédé selon l'une quelconque des revendications 1 à 3, comprenant en outre la présentation d'au moins un élément parmi ladite estimation de quantité d'énergie, de quantité de carburant et de coût de carburant pour le conducteur du véhicule par le biais d'un moyen d'affichage (130) situé dans ledit véhicule (100).

5. Procédé selon l'une quelconque des revendications 1 à 3, comprenant en outre la transmission de ladite estimation d'énergie et/ou la quantité de carburant et/ou le coût de carburant à un emplacement distant.

6. Procédé selon l'une quelconque des revendications précédentes, comprenant en outre

    - l'annulation de l'au moins une quantité accumulée d'énergie lorsqu'au moins une des conditions suivantes est remplie :

        - le moteur (101) du véhicule (100) est démarré ;
        - le moteur (101) du véhicule (100) est démarré pour la première fois du jour ;
        - le véhicule commence un trajet d'un point A à un point B pendant lequel le moteur (101) est mis à l'arrêt un certain nombre de fois ;
        - ledit véhicule (100) est rechargé ;
        - le véhicule (100) est repris par un autre conducteur.

7. Procédé selon l'une quelconque des revendications précédentes, comprenant en outre la réalisation d'une évaluation de la conduite dudit véhicule sur la base de ladite représentation accumulée de l'énergie consommée par ladite première force de freinage.

8. Procédé selon l'une quelconque des revendications précédentes, comprenant en outre

    - la détermination sur la base de ladite représentation accumulée de l'énergie consommée par ladite première force de freinage d'une première mesure corrective pour réduire la consommation d'énergie par ladite première force de freinage, et
    - la présentation de ladite première mesure corrective pour un conducteur dudit véhicule.

9. Procédé selon l'une quelconque des revendications précédentes, dans lequel ledit véhicule (100) comprend au moins un consommateur d'énergie sous la forme d'un premier système de freinage au moyen duquel ladite première force de freinage est appliquée, le procédé comprenant en outre

    - l'estimation pour une succession d'activations dudit premier système de frein de la quantité d'énergie consommée par celui-ci lorsqu'il est activé.

10. Procédé selon la revendication 9, dans lequel ledit premier système de freinage est un système de freinage de service ou un système de freinage complémentaire.

11. Procédé selon la revendication 9 ou 10, comprenant en outre l'estimation, lors de la détermination de ladite première quantité d'énergie consommée, d'un couple de freinage appliqué par ledit premier système de freinage.

12. Procédé selon l'une quelconque des revendications 9 à 11, comprenant en outre l'estimation de la quantité d'énergie consommée par ledit premier système de freinage pendant ses activations qui entraînent une réduction de vitesse pour ledit véhicule (100), et

    - l'accumulation de quantités estimées d'énergie pour les activations dudit premier système de freinage qui entraînent une réduction de vitesse pour ledit véhicule (100) .

13. Procédé selon l'une quelconque des revendications 9 à 12, dans lequel ledit premier système de freinage prend la forme d'un système de frein à vitesse constante.

14. Procédé selon l'une quelconque des revendications 9 à 13, dans lequel ledit véhicule (100) est muni d'au moins un autre système de frein, comprenant en outre l'estimation pour chacun desdits systèmes de frein de la quantité d'énergie consommée par suite de son activation, et l'accumulation desdites quantités estimées d'énergie pour des activations successives de chacun desdits systèmes de frein.

15. Programme informatique qui contient un code informatique et qui, lorsque ledit code informatique est exécuté sur un ordinateur, amène ledit ordinateur à appliquer le procédé selon l'une quelconque des revendications 1 à 14.

16. Produit de programme informatique comprenant un support lisible par ordinateur et un programme informatique selon la revendication 15, le programme étant contenu dans ledit support lisible par ordinateur.

17. Système permettant de déterminer une consommation d'énergie d'un véhicule (100) muni d'une première alimentation sous la forme d'un moteur (101) destiné à générer une première force d'entraînement pour une propulsion dudit véhicule (100), le véhicule (100) comprenant au moins un premier consommateur d'énergie sous la forme d'un premier système de frein, **caractérisé en ce que** le système comprend

    - un moyen permettant d'estimer, lorsque ledit véhicule (100) se déplace dans une première direction, l'énergie consommée par suite d'une première force de freinage qui va à l'encontre du mouvement dudit véhicule (100) dans ladite direction ;

- un moyen destiné à accumuler, pendant ledit déplacement dudit véhicule (100), une représentation de l'énergie consommée par suite de ladite première force de freinage ;

- un moyen destiné à estimer l'énergie consommée par suite d'au moins une autre force de freinage qui va à l'encontre du mouvement du véhicule (100) dans ladite direction ;

- un moyen destiné à accumuler, pendant ledit déplacement dudit véhicule (100), une représentation de l'énergie consommée par suite de ladite au moins une autre force de freinage, et

- un moyen permettant de déterminer une répartition de l'énergie consommée entre lesdites forces de freinage, et de réaliser une évaluation de la conduite dudit véhicule sur la base de ladite répartition.

**18.** Véhicule (100) **caractérisé en ce qu'**il est muni d'un système selon la revendication 17.

FIG. 1A

100

113
117
104
108
105
114
107
118
111
112
103
109
106
102
110
119
101
115
116
130
131

FIG. 1B

FIG. 2

200

EP 2 731 843 B1

# FIG. 3

Energy consumption [Litres/100 km]

□ Reference
89 km/h @ 1350 rpm

■ 85 km/h @ 1290 rpm

**EP 2 731 843 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005002122 A1
- EP 2295935 A1
- DE 19958393 A1